# EUROPEAN PATENT SPECIFICATION

(11) **EP 0 436 865 B1**
(45) Date of publication and mention of the grant of the patent: **14.06.1995**
(21) Application number: 90124092.9
(22) Date of filing: 13.12.1990
(51) Int. Cl.: B60R 16/00, H01H 37/52, F23Q 7/00

(54) **Electric contact holder base**
Fassung für elektrischen Kontakt
Douille d'un contact électrique

(30) Priority: 12.01.1990 IT 5281290 U
(43) Date of publication of application: 17.07.1991
(73) Proprietor: IMOS ITALIA S.r.l., I-10138 Torino (IT)
(72) Inventor: Croce, Claudio, I-10040 Caselette (TO) (IT)
(74) Representative: Lotti, Giorgio

(56) References cited:
- EP-A- 0 200 247
- DE-A- 2 755 620
- DE-B- 1 632 593
- DE-B- 2 424 385
- DE-C- 3 932 604
- US-A- 3 863 047

## Description

This invention refers to an electric contact holder base for electric lighters and for other motor vehicle gadgets, provided with a thermal protection against overheating and realised so as to allow it to be re-utilised.

Usually in electric contact holder bases for gadgets such as lighters, the thermal protection is realised by an element of plastic material that melts in case of accidental overheating and causes the fuse to burn for short circuit. In this way, possible damages to the walls surrounding the gadget are avoided, but the case cannot be repaired, so that it necessarily has to be completely substituted.

To avoid that operation of the thermal protection may cause the need to substitute the whole electric holder base, other solutions propose the use of a bimetallic lamina acting as a thermal protection. This lamina is however obtained as a whole with the same springs that in the base have the function of retaining the body of a lighter or as a polarity for other gadgets; consequently, a great waste of material takes place in obtaining this substantially T shaped piece out of a bimetallic strip.

Furthermore, in said solutions, the bimetallic portion which is meant to provide thermal protection is fitted at the inside of the base, in such a way that they are subject to accidental damages. This happens because the protection is folded back against the gadget that is inserted into the base. Therefore, it is enough to give the gadget a slightly greater pressure than the usual, to cause the lamina to deform. Consequently, its operation is altered or compromised. In order to avoid this eventuality, the bottom of the base is provided with an element of insulating material that raises expenses.

US-A-3 863 047 refers to an electric contact holder base for electric lighters or other gadgets for motor vehicles, provided with a thermal protection against overheating that allows its re-utilisation, comprising:
a substantially cylindrical body permanently fixed to a seat in the driver's cabin and carrying electric contacts for an item that is inserted in said cylindrical body;
a bimetallic spring acting as a holding element of the lighter in the cylindrical body during the resting phase of the same;
a bimetallic lamina, inside the base as the thermal protection device against overheating, having one end fixedly connected to a first element and the other end being a free end adapted for deflecting and contacting a second element so as to establish electric contact between said first element and said second element, thereby causing the lighter to be short-circuited on overheating.

In a first embodiment of this disclosure, the fixed end of the bimetallic lamina is in permanent electrical connection with the lighter case (first element), while the free end is arranged to contact a terminal (second element) when the bimetallic lamina is flexed by an overheat temperature. In a second embodiment, the arrangement is reversed: the fixed end of the bimetallic lamina is in permanent electrical connection with a terminal (first element), while the free end is arranged to contact the lighter case (second element) when the bimetallic lamina is flexed by an overheat temperature.

Although US-A-3863047 discloses a bimetallic spring and a separate bimetallic lamina, no device is provided in order to make sure that temperature shall not have to rise too much to get the lamina to deflect enough to cause a short-circuit. Particularly, no provision is made for using two different bimetals for the lamina and the spring, nor suggestions to provide a bimetallic lamina capable of deflecting maintaining a substantially linear course as a function of temperature for higher temperatures greater in comparison with the bimetallic spring.

A purpose of this invention is to propose an electric contact holder base having a thermal protection made of a bimetallic lamina cheaper than the ones that are actually used, and in which the bimetallic lamina is located inside the base so as not to be subject to accidental crashes and deformations, resulting reliable in time.

Another purpose of this invention is to propose a bimetallic lamina showing a substantially linear relation between deflection and temperature for the entire range of temperatures at which the device has to work. This prevents the temperature from reaching excessively high values inside the base and, at the some time, it allows to realise the base that is the object of the present invention with a simple structural arrangement, avoiding therefore to have to work with very low tolerances when assembling the device.

For these and other purposes that will be better understood later on, this invention provides an electric contact holder base according to claim 1.

The object of this invention is now going to be described referring to the enclosed drawings, in which:
- Fig. 1: shows an electric contact holder base for a motor vehicle, partially sectioned and provided with the thermal protection according to this invention; and
- Fig. 2: shows two temperature-deflection diagrams that are typical of materials that are used for some parts of the invention.

The base is usually a hollow cylindrical body 10 having an open end for inserting a lighter or another suitable gadget; the other end of the base is closed by an end plate 18 carrying electric contacts 11 and 12.

One of the contacts 11 is electrically connected with the cylindrical body 10 while the other one 12 is connected with traditional springs 13 that act as holding means or as a polarity for other gadgets.

A ceramic element 15 is interposed between the head of a rivet 14, electrically connected with contact 12, and contact 11. The head of the rivet 14 acts as a binding element for the lamina that realises the springs 13 on the ceramic element 15.

According to this invention, between the head of the rivet 14 and the ceramic body 15, a bimetallic lamina 16 is inserted with its free end 17 folded back towards the bottom 18 of the cylindrical body 10, between its side wall and the ceramic body 15.

In case of an excessive overheating of the electric hot plate of the lighter or of the gadget's tap, the bimetallic lamina 16 bends and its end 17 contacts the wall of the cylindrical body 10 short-circuiting in this way the device and causing the burnout of a protecting fuse.

Once the overheating reason has been removed and the fuse replaced, the cylindrical body 10 will be able to resume its own normal operation, because in the meantime the bimetallic lamina 16 will have returned automatically to its original position and no other component of the base or of the gadget will have suffered alterations or damages so as to compromise the correct operations thereof.

Experimentally it can be observed that the thermal deformation of bimetals tends to assume a considerably non-linear increase in function of the temperature rise.

This means that, over a certain threshold, an additional temperature increase will not cause any considerable dilatation in the heated bimetal.

In the case of the lamina 16 it is necessary that such bimetallic lamina should produce a substantially linear temperature-deflection diagram for the whole range of the temperatures that are concerned.

This is necessary because, in case of an excessive overheating of the lighter's hot plate, the free end 17 of the lamina 16 must be able to touch the wall of the cylindrical body 10 quite quickly. The purpose is to avoid that the temperature should rise too much to get the lamina to reach the deflection that causes the short-circuit.

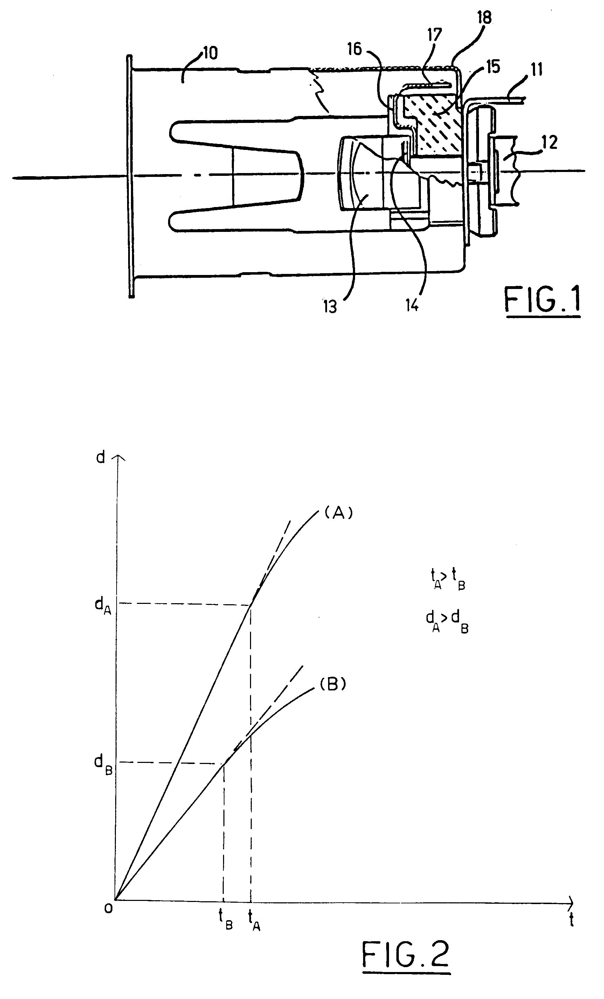

It can be observed that in a resting position (fig. 1) the free end 17 is at a certain distance from the wall of the cylindrical body 10. Otherwise, a bimetallic lamina with non linear characteristics would require to position the end 17 of the lamina 16 at a minimum distance from the wall to allow the short circuit to take place at the prescribed temperatures. In such case it would be also necessary to work with very low tolerances, inevitably raising the manufacturing costs.

Referring to fig. 2 a qualitative temperature-deflection diagram with substantially linear characteristics up to point (t_{A}, d_{A}) is marked with (A). This diagram suits a bimetallic lamina 16 meant to short-circuit the device that is the object of the present invention.

Temperatures have been reported on the abscissa line, while the corresponding deflections of the lamina 16 have been reported on the ordinate line.

As to spring 13, the foregoing question is submitted in absolutely different terms: the purpose of the spring 13 is in fact that of releasing the heating element of the lighter once the ideal temperature level is reached.

The heating element, not shown in the drawings, is in turn submitted to the returning force of a helical spring: consequently the bimetallic spring 13 has no need to exhibit a linear behaviour within the same range of temperatures as the bimetallic lamina 16.

Considering the different functions of the bimetallic lamina 16 and of the bimetallic spring 13, this invention allows to choose the most suitable kind of materials for each one of them. For example, in fig. 2 the "temperature-deflection" graph of a bimetallic spring 13 is marked with (B); said spring has different characteristics and a linear course up to point (t_{B}, d_{B}) within a smaller range of temperatures and deformations compared to the graph (A) of the lamina that is suitable for realising the bimetallic lamina 16.

After these previous considerations, one of the purposes of this invention can be understood: as shown in fig. 1, the lamina 16 is a simple strip of bimetallic material separated from the spring 13 and assembled separately from it. The materials of the lamina 16 and the spring 13 are advantageously different and have different characteristics.

Moreover, the lamina 16 is folded back so as not to be crashed and deformed by the gadget that is inserted inside the base or by other objects that could be accidentally or intentionally slipped inside the base.

## Claims

1. An electric contact holder base for electric lighters or other gadgets for motor vehicles, provided with a thermal protection against overheating that allows its re-utilisation, comprising:
a substantially cylindrical body (10) permanently fixed to a seat in the driver's cabin and carrying electric contacts (11, 12) for an item that is inserted in said cylindrical body;
at least a bimetallic spring (13), acting as a holding element of the lighter in the cylindrical body during the resting phase of the same, said spring (13) being adapted for deflecting as temperature rises and releasing the lighter at a given temperature;
a bimetallic lamina (16), inside the base as the thermal protection device against overheating, having one end fixedly connected to the electric contact (12) as a first element and the other end (17) being a free end adapted for deflecting on overheating and contacting the wall of the cylindrical body (10) as a second element so as to establish electric contact between said first element and said second element, thereby causing the lighter to be short-circuited at a temperature which is higher than said given temperature at which the bimetallic spring (13) ought to release the lighter;
characterized in that the bimetallic lamina (16) and the bimetallic spring (13) are made of materials having different characteristics with regard to the respective deflections as a function of temperature, whereby the deflection of the bimetallic lamina (16) maintains a substantially linear course as a function of temperature for higher temperatures in comparison with the bimetallic spring (13).

## Patentansprüche

1. Eine Fassung für elektrischen Kontakt für elektrische Anzünder oder anderes Zubehör für Kraftfahrzeuge, die mit einem thermischen Schutz gegen Überhitzung versehen ist, welche ihre erneute Benutzung erlaubt, umfassend:
einen im wesentlichen zylindrischen Körper (10), der fest an einer Stelle im Fahrerraum befestigt ist und elektrische Kontakte (11, 12) für einen Gegenstand aufweist, der in den zylindrischen Körper eingeführt wird;
mindestens eine Bimetallfeder (13), die als Halteelement für den Anzünder in dem zylindrischen Körper während dessen Ruhephase dient, wobei die Feder (13) sich auslenkt, wenn die Temperatur steigt, und den Anzünder bei einer vorgegebenen Temperatur freigibt;
ein dünnes Bimetallplättchen (16) an der Innenseite der Fassung als thermische Schutzvorrichtung gegen Überhitzung, wobei ein Ende fest mit dem elektrischen Kontakt (12) als ein erstes Element verbunden ist und das andere Ende (17) ein freies Ende ist, das sich bei Überhitzung auslenkt und die Wand des zylindrischen Körpers (10) als zweites Element berührt, um einen elektrischen Kontakt zwischen dem ersten und dem zweiten Element herzustellen, wodurch der Anzünder bei einer Temperatur, die höher ist als die gegebene Temperatur, bei der die Bimetallfeder (13) den Anzünder freigeben sollte, kurzgeschlossen wird;
dadurch gekennzeichnet,
daß das dünne Bimetallplättchen (16) und die Bimetallfeder (13) aus Materialien mit unterschiedlichen Eigenschaften hinsichtlich der jeweiligen Auslenkung als Funktion der Temperatur bestehen, wobei die Auslenkung des Bimetallplättchens (16) im Vergleich zu der Bimetallfeder (13) bei höheren Temperaturen im wesentlichen linear verläuft als Funktion der Temperatur.

## Revendications

1. Douille de contact électrique pour allume-cigare électrique ou autres gadgets pour véhicules automobiles, munie d'une protection thermique contre la surchauffe permettant sa réutilisation, comprenant :
un corps (10) sensiblement cylindrique fixé en permanence à un siège dans l'habitacle du conducteur et supportant des contacts électriques (11, 12) pour un organe qui est inséré dans ledit corps cylindrique ;
au moins un ressort bimétallique (13), agissant comme élément support de l'allume-cigare dans le corps cylindrique durant la phase de repos de celui-ci, ledit ressort (13) étant adapté pour s'incurver au fur et à mesure que la température s'élève et pour libérer l'allume-cigare à une température donnée ;
une lame bimétallique (16), intérieure à la douille en tant que dispositif de protection thermique contre la surchauffe, ayant une extrémité connectée de façon fixe au contact électrique (12) en tant que premier élément, son autre extrémité (17) étant libre et adaptée pour s'incurver en cas de surchauffe, et contactant la paroi du corps cylindrique (10) en tant que deuxième élément afin d'établir le contact électrique entre ledit premier élément et ledit deuxième élément, entraînant ainsi la mise en court-circuit de l'allume-cigare à une température qui est supérieure à ladite température donnée à laquelle le ressort bimétallique (13) doit libérer l'allume-cigare ;
caractérisée en ce que la lame bimétallique (16) et le ressort bimétallique (13) sont constitués de matériaux ayant des caractéristiques différentes en ce qui concerne les déflexions respectives en fonction de la température, de sorte que la déflexion de la lame bimétallique (16) conserve une progression sensiblement linéaire en fonction de la température pour des températures plus élevées en comparaison avec le ressort bimétallique (13).
